# EUROPÄISCHE PATENTSCHRIFT

(11) **EP 1 772 338 B1**
(45) Veröffentlichungstag und Bekanntmachung des Hinweises auf die Patenterteilung: **03.12.2008**
(21) Anmeldenummer: 06120134.9
(22) Anmeldetag: 05.09.2006
(51) Int. Cl.: B60W 10/18, B60W 30/16

(54) **Geschwindigkeits- und Abstandsregler für Kraftfahrzeuge**
Speed and distance controller (ACC) for motor vehicles
Régulateur de distance et de vitesse pour véhicules

(30) Priorität: 10.10.2005 DE 102005048338
(43) Veröffentlichungstag der Anmeldung: 11.04.2007
(73) Patentinhaber: ROBERT BOSCH GMBH, 70442 Stuttgart (DE)
(72) Erfinder: Lucas, Bernhard, 74354 Besigheim (DE); Liebemann, Edwin, 71229 Leonberg (DE); Hoetzer, Dieter, Farmington Hills MI 48331 (US)

(56) Entgegenhaltungen:
- EP-A- 1 118 965
- WO-A-02/12011
- DE-A1- 19 536 695
- FR-A- 2 851 537

## Beschreibung

### Stand der Technik

Die Erfindung betrifft einen Geschwindigkeits- und Abstandsregler für Kraftfahrzeuge, der in einem Standard-Betriebsmodus eine Funktionalität aufweist, die eine Regelung auch bei niedriger Geschwindigkeit erlaubt und in das Bremssystem des Fahrzeugs eingreift.

Geschwindigkeits- und Abstandsregler, auch als ACC-Systeme bezeichnet (Adaptive Cruise Control), ermöglichen es, die Geschwindigkeit des Fahrzeugs automatisch auf eine vom Fahrer gewählte Wunschgeschwindigkeit zu regeln, sofern sich kein langsameres vorausfahrendes Fahrzeug auf der eigenen Spur befindet. Eine Abstandssensorik, beispielsweise ein Radarsensor, ermöglicht es, vorausfahrendes Fahrzeuge zu erkennen, und wenn ein solches Fahrzeug geortet wird, so wird dieses Fahrzeug in einer sogenannten Folgefahrt automatisch in einem angemessenen Abstand verfolgt. Die bisher im Einsatz befindlichen ACC-Systeme sind generell für Fahrten auf Autobahnen oder gut ausgebauten Landstraßen vorgesehen und lassen sich nur oberhalb einer bestimmten Mindestgeschwindigkeit von beispielsweise 30 km/h aktivieren.

WO 02/12011, als nächstliegender Stand der Technik betrachtet, zeigt ein Geschwindigkeits- und Abstandsregler für Kraftfahrzeuge, der in einem Standard-Betriebsmodus eine Funktionalität aufweist, die eine Regelung auch bei niedriger Geschwindigkeit erlaubt und in das Bremssystem des Fahrzeugs eingreift.

Es sind jedoch ACC-Systeme mit einem erweiterten Funktionsumfang in Entwicklung, die beispielsweise die folgenden zusätzlichen Funktionen bieten: Folgefahrt bei sehr niedrigen Geschwindigkeiten (unterhalb von 30 km/h), Bremsen in den Stand, wenn das Vorderfahrzeug anhält, automatisches Halten des Fahrzeugs im Stand und gegebenenfalls automatisches Wiederanfahren, wenn der Verkehr es zuläßt. Diese erweiterte Funktionalität wird häufig zusammenfassend als Stop & Go Funktion bezeichnet.

Um einen hohen Kundennutzen der Stop & Go Funktion zu gewährleisten ist es u.U. notwendig, zusätzlich zu der Abstandssensorik, die für die normale Abstandsregelfunktion benötigt wird, eine Zusatzsensorik vorzusehen, mit der Hindernisse im erweiterten Nahbereich geortet werden können. Es ist auch bereits vorgeschlagen worden, die Stop & Go Funktion automatisch zu deaktivieren, wenn die Zusatzsensorik ausfällt.

### Vorteile der Erfindung

Durch die Erfindung mit den in Anspruch 1 angegebenen Merkmalen wird die Betriebssicherheit des Fahrzeugs erhöht.

Zu diesem Zweck ist erfindungsgemäß eine Überwachungseinrichtung vorgesehen, die den Zustand des Bremssystems des Fahrzeugs überwacht, und wenn diese Überwachungseinrichtung Anzeichen für einen erhöhten Verschleiß oder eine drohende Beeinträchtigung des Bremssystems feststellt, bewirkt eine Schalteinrichtung das automatische Umschalten in einen eingeschränkten Betriebsmodus, in dem die grundlegenden Funktionen des ACC-Systems zwar weiterhin zur Verfügung stehen, das Bremssystem jedoch geschont wird, da stark belastende Eingriffe in das Bremssystem vermieden oder in ihrer Stärke oder Häufigkeit reduziert werden.

Der Betrieb eines ACC-Systems, insbesondere im unteren Geschwindigkeitsbereich und erst recht bei Stop & Go, stellt über die Fahrzeuglebensdauer generell relativ hohe Anforderungen an das Bremssystem des Fahrzeugs. Zum einen muß das Bremssystem mit ausreichender Zuverlässigkeit und Präzision elektronisch regelbar sein, damit beispielsweise Operationen wie ein geregeltes Bremsen in den Stand in komfortabler Weise durchgeführt werden können. Außerdem erfordert der Betrieb des Abstands- und Geschwindigkeitsreglers insbesondere im Stadtverkehr und im Stop & Go Betrieb relativ häufige und zum Teil auch stärkere Bremsbetätigungen, so daß es zu einer erhöhten Belastung der hydraulischen, elektrischen und mechanischen Komponenten des Bremssystems und somit zu einem erhöhten Verschleiß kommen kann.

Das Bremssystem wird bei der Konstruktion des Fahrzeugs so ausgelegt, daß es den im Betrieb zu erwartenden Belastungen standhalten kann, wobei eine angemessene Sicherheitsreserve eingerechnet wird. In extremen Ausnahmefällen, beispielsweise Extremfahrern, die bedingt durch ihr eigenes Verhalten und die umgebenden Randbedingungen (ständiges Staufahren) das Stop & Go System ständig im Einsatz haben, könnte die Belastungsgrenze der Bremsanlage überschritten werden, was letztlich zu einem Ausfall oder zu einer Funktionsbeeinträchtigung der Bremse führen könnte. Hier schafft die Erfindung zusätzliche Sicherheit.

Wollte man bei der Auslegung des Bremssystems solche extrem seltenen, theoretisch aber immerhin denkbaren Ausnahmesituationen berücksichtigen, so würden sich die Kosten für die Bremsanlage beträchtlich erhöhen. Die Erfindung ermöglicht es, den gleichen, extrem hohen Sicherheitsstandard auch mit einem kostengünstigeren Bremssystem zu erreichen. Dazu brauchen lediglich gewisse Funktionseinschränkungen beim ACC-System in Kauf genommen zu werden, was jedoch, da solche Ausnahmesituationen ohnehin sehr unwahrscheinlich sind, ohne weiteres hinnehmbar ist.

Vorteilhafte Ausgestaltungen und Weiterbildungen der Erfindung ergeben sich aus den Unteransprüchen.

Bevorzugt ist der Schalteinrichtung eine Fahrerschnittstelle zugeordnet, über die akustische und/oder optische Signale oder Mitteilungen an den Fahrer ausgegeben werden können, so daß der Fahrer über den jeweils zur Verfügung stehenden Funktionsempfang des Systems informiert wird und das Systemverhalten für ihn transparent gemacht wird. Bevorzugt sollten sich die akustischen und/oder optischen Signale, die auf das Umschalten in den eingeschränkten Betriebsmodus hinweisen, deutlich von sonstigen Signalen unterscheiden, die während des normalen Betriebs des ACC-Systems ausgegeben werden. Der Hinweis auf die Funktionseinschränkung des ACC-Systems kann zweckmäßig mit der Aufforderung an den Fahrer verbunden werden, eine Werkstatt aufzusuchen, um das Bremssystem überholen zu lassen.

Im eingeschränkten Betriebsmodus stehen die grundlegenden Funktionen des ACC-Systems ähnlich wie die Funktionen eines herkömmlichen ACC-Systems ohne Stop & Go Funktion nur oberhalb einer bestimmten Mindestgeschwindigkeit zur Verfügung. Wenn in diesem Modus die Mindestgeschwindigkeit unterschritten wird, kann gemäß einer einfachen Ausführungsform eine Selbstabschaltung des Systems erfolgen, verbunden mit einem Hinweis an den Fahrer, durch den der Fahrer aufgefordert wird, selbst die Kontrolle über das Fahrzeug zu übernehmen. Das gleiche gilt auch in den Fällen, in denen bei Umschaltung in den eingeschränkten Modus die aktuelle Geschwindigkeit des Fahrzeugs unterhalb der Mindestgeschwindigkeit liegt.

Die Selbstabschaltung erfolgt in definierter Weise, unter Berücksichtigung der Belange der Verkehrssicherheit. Im einfachsten Fall wird das System nach Ausgabe der Übernahmeaufforderung vollständig abgeschaltet, so daß das Fahrzeug verzögert bzw. nicht anfährt, sofern nicht der Fahrer selbst das Gaspedal betätigt. Gemäß einer zweckmäßigen Weiterbildung bleibt das System insbesondere dann, wenn die Fahrzeuggeschwindigkeit größer als null ist, zumindest noch für eine Übergangszeit aktiv, um dem Fahrer Gelegenheit zu geben, selbst die Kontrolle zu übernehmen. Während dieser Übergangszeit sind jedoch vorzugsweise positive Beschleunigungen des Fahrzeugs unterdrückt, und damit ist auch ein automatisches Wiederanfahren des Fahrzeugs ausgeschlossen.

Gemäß einem weiteren Erfindungsgedanken umfaßt der eingeschränkte Modus mehrere Stufen oder Rückfallebenen, in denen die Funktionalität zunehmend eingeschränkt ist. Dieses Konzept ist auch dann zweckmäßig, wenn die Einschränkung des Funktionsumfangs nicht im Hinblick auf das Bremssystem, sondern aus anderen Gründen erfolgt, beispielsweise wegen einer Funktionsbeeinträchtigung der Zusatzsensorik, wobei dann die verschiedenen Stufen der Funktionseinschränkung mit der Art oder Schwere der Funktionsbeeinträchtigung der Zusatzsensorik korrespondieren.

Beispielsweise kann eine erste Stufe der Funktionseinschränkung darin bestehen, daß kein automatisches Wiederanfahren aus dem Stand zugelassen wird. Dadurch läßt sich im Staubetrieb die Häufigkeit von automatischen Anfahr- und Bremsvorgängen und die damit verbundene Beanspruchung des Bremssystems reduzieren.

In einer zweiten Stufe kann eine Grenzgeschwindigkeit vorgesehen sein, unterhalb derer sich die Stop & Go Funktion nicht mehr aktivieren läßt. Solange die Fahrgeschwindigkeit unter dieser Grenzgeschwindigkeit liegt, kann folglich der Fahrer die Stop & Go Funktion nicht einschalten, sondern er muß die Geschwindigkeit selbst mit Gas- und Bremspedal kontrollieren. Dabei ist die Belastung des Bremssystems im Allgemeinen deutlich geriner als im automatischen Regelbetrieb. Wenn jedoch die Stop & Go Funktion einmal aktiv ist, bleibt sie vorzugsweise auch dann in Betrieb, wenn die Fahrgeschwindigkeit unter die Grenzgeschwindigkeit abnimmt.

Ergänzend oder zusätzlich kann in der zweiten Stufe unterhalb einer bestimmten Geschwindigkeit eine Beschränkung auf einen sogenannten "Brake only" Modus vorgesehen sein, in dem der Regler nur noch in das Bremssystem aber nicht mehr in das Antriebssystem des Fahrzeugs eingreift. Auch hierdurch wird die Häufigkeit und die Intensität von Bremsvorgängen reduziert. Wenn der Fahrer wieder beschleunigen will, muß er selbst das Gaspedal betätigen.

Schließlich ist es in der zweiten Stufe ergänzend oder zusätzlich auch möglich, unterhalb einer bestimmten Geschwindigkeit von beispielsweise 5 km/h nur noch ein gesteuertes Anhalten des Fahrzeugs zuzulassen, bei dem die Betätigung der Bremse geschwindigkeitsunabhängig nach einem festen Programm erfolgt, im Gegensatz zu einem geregelten Anhalten, bei dem auch während des Anhaltevorgangs die Bremsbetätigung geschwindigkeitsabhängig geregelt wird.

Eine dritte Stufe könnte darin bestehen, daß die Stop & Go Funktion vollständig deaktiviert wird, so daß nur noch die normale ACC-Funktion zur Verfügung steht.

Eine vierte und letzte Stufe könnte darin bestehen, daß der Abstands- und Geschwindigkeitsregler vollständig deaktiviert wird, einschließlich der "normalen" ACC-Funktion.

Wenn die Einschränkung des Funktionsumfangs im Hinblick auf das Bremssystem erfolgt, so gibt es verschiedene Kriterien, nach denen der Zustand des Bremssystems bewertet werden kann. Ein Kriterium ist beispielsweise die über die gesamte Betriebszeit des Fahrzeugs kumulierte Betriebsdauer des Abstands- und Geschwindigkeitsreglers. Gemäß einer Weiterbildung kann dabei nach verschiedenen Betriebsmodi differenziert werden, so daß zum Beispiel der Stop & Go Modus stärker gewichtet wird als der normale ACC-Modus. Alternative Kriterien wären die kumulierte Häufigkeit oder Dauer der Bremsbetätigungen oder das kumulierte Zeitintegral der Bremskraft (ggf. nicht nur während des Regelbetriebs, sondern auch unter Einbeziehung der fahrergesteuerten Bremsbetätigungen).

Fortgeschrittene elektronische Regelsysteme (z.B. ESP) für die Bremsanlage verfügen auch über gewisse Selbstdiagnosefunktionen, die über den Zustand der Bremsanlage Auskunft geben, beispielsweise über die Abnutzung der Bremsbeläge, die Temperatur und dergleichen. Die Überwachungseinrichtung des Geschwindigkeits- und Abstandsreglers kann dann alternativ oder zusätzlich auch direkt den Zustand des Bremssystems auswerten. Dies schließt auch die Möglichkeit ein, von einer höheren Stufe der Funktionseinschränkung auf eine niedrigere Stufe zurückzuschalten oder die vollständige Funktionalität wieder herzustellen, wenn sich die Bremsanlage erholt hat. Die verschiedenen Kriterien lassen sich auch in der Weise miteinander kombinieren, daß in Abhängigkeit von der Betriebsdauer von Zeit ein Zeit ein Befehl für eine Selbstdiagnose an das Bremssystem ausgegeben wird und daß die Funktionalität nur dann eingeschränkt wird, wenn die Bremsanlage eine signifikante Beeinträchtigung ihres Zustands meldet.

### Zeichnung

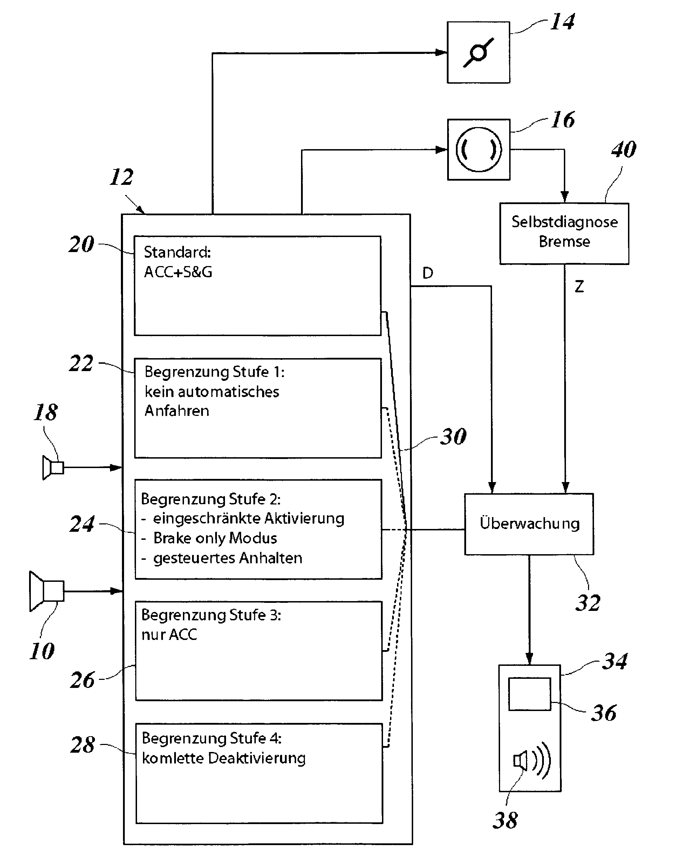

Ein Ausführungsbeispiel der Erfindung ist in der Zeichnung dargestellt und in der nachfolgenden Beschreibung näher erläutert.

Die einzige Zeichnungsfigur zeigt:
ein Blockdiagramm eines erfindungsgemäßen ACC-Systems.

Die Zeichnung zeigt als vereinfachtes Blockdiagramm ein ACC-System mit einer Abstandssensorik, beispielsweise einem Abstandsradar 10, und einem ACC-Regler 12, der in bekannter Weise die Geschwindigkeits- und Abstandsregelfunktionen sowie die Stop & Go Funktion ausführt und zu diesem Zweck nach Bedarf in das Antriebssystem 14 oder das Bremssystem 16 des Fahrzeugs eingreift. Das Abstandsradar 10 stellt die Daten für die Abstandsregelung bereit. Als Zusatzsensorik ist ein Nahbereichsradar 18 vorgesehen, das das etwaige Objekte im unmittelbaren Vorfeld des Fahrzeugs ortet und zusätzliche Daten für die Stop & Go Funktion zur Verfügung stellt.

Ein Standard-Betriebsmodus 20 des ACC-Reglers 12 umfaßt die üblichen ACC- und Stop & Go Funktionen. Zusätzlich weist der ACC-Regler 12 mehrere eingeschränkte Betriebsmodi 22, 24, 26 und 28 auf, in denen die Funktionalität stufenweise stärker eingeschränkt ist.

Eine Schalteinrichtung 30 zum Umschalten zwischen diesen Betriebsmodi ist symbolisch als Schalter dargestellt. In der Praxis sind der Standard-Betriebsmodus 20, und die eingeschränkten Betriebsmodi sowie die Schalteinrichtung 30 als Software in einem elektronischen Datenverarbeitungssystem implementiert, das die Hardware des ACC-Reglers 12 bildet.

Die Schalteinrichtung 30 wird durch eine Überwachungseinrichtung 32 gesteuert, die den Zustand des Bremssystems 16 überwacht. Die Überwachung kann mit Hilfe bekannter Selbsttest-Routinen erfolgen, zumindest bei Antritt der Fahrt, bzw. bei Einschalten des ACC-Systems und vorzugsweise auch fortlaufend oder periodisch während des Betriebs des Systems.

Der Überwachungseinrichtung 32 ist eine Fahrerschnittstelle 34 zugeordnet, die im gezeigten Beispiel ein Display 36 zur Anzeige von Texten oder symbolischen Hinweisen sowie einen Lautsprecher 38 zur Ausgabe von Warnsignalen oder gegebenenfalls auch von gesprochenen Hinweisen umfaßt. Die Fahrerschnittstelle 34 kann auch für sonstige Funktionen des ACC-Systems genutzt werden.

Auch die Überwachungseinrichtung 32 und die Treiberfunktionen für die Fahrerschnittstelle 34 sind zweckmäßig als Software im ACC-Regler 12 implementiert.

Bei der Bewertung des Zustands des Bremssystems 16 wertet die Überwachungseinrichtung 32 Signale D und Z aus unterschiedlichen Quellen aus. Das Signal D repräsentiert einen vom ACC-Regler gelieferten Parameter, der die seit in Inbetriebnahme des Fahrzeugs insgesamt aufgelaufene Betriebsdauer des Reglers angibt. Das Signal Z ist ein Zustandssignal, das von einer dem Bremssystem 16 zugeordneten Selbstdiagnoseeinrichtung 40 geliefert wird.

Im Normalfall befindet sich der ACC-Regler 12, wenn er vom Fahrer aktiviert wird, im Standard-Betriebsmodus 20. Wenn auch die Stop & Go Funktion (S&G) aktiv ist, werden im gesamten Geschwindigkeitsbereich zusätzlich die Signale der Zusatzsensorik, also beispielsweise des Nahbereichsradars 18 ausgewertet. Die Stop & Go Funktion ist auch in der Lage, das eigene Fahrzeug in den Stand zu bremsen, wenn das Vorderfahrzeug anhält. Ebenso ermöglicht es diese Funktion, unter bestimmten Bedingungen einen automatischen Anfahrvorgang einzuleiten, wenn sich das Vorderfahrzeug wieder in Bewegung setzt. Nach längerer Standzeit des Fahrzeugs muß der Anfahrbefehl vom Fahrer quittiert werden, wozu der Fahrer beispielsweise über den Lautsprecher 38 eine akustische Aufforderung erhält.

Die Überwachungseinrichtung 32 überwacht anhand des Signals D die Betriebsdauer des Reglers. Als Beispiel soll hier angenommen werden, daß das Signal D die kumulierte Zeit repräsentiert, in der die Stop & Go Funktion aktiv war, die die Bremse besonders belastet. Wenn die Betriebsdauer einen voreingestellten Schwellenwert überschreitet, fragt die Überwachungseinrichtung über die Selbstdiagnoseeinrichtung 40 den Zustand der Bremse ab. Wenn das daraufhin ausgegebene Signal Z anzeigt, daß die Bremse noch in einwandfreiem Zustand ist, bleibt der Standard-Betriebsmodus 20 aktiv. Dieser Vorgang kann sich mehrmals wiederholen, jeweils wenn die Betriebsdauer einen bestimmten höheren Schwellenwert überschreitet. Die Intervalle zwischen diesen Schwellenwerten können dabei mit zunehmendem Alter des Fahrzeugs kleiner werden.

Wenn das Signal Z anzeigt, daß sich der Zustand der Bremsanlage verschlechtert hat, veranlaßt die Überwachungseinrichtung 32 über die Schalteinrichtung 30 je nach Grad der Schädigung der Bremsanlage eine Umschaltung auf einen der Betriebsmodi 22 bis 28.

Bei nur geringer Beeinträchtigung der Bremsanlage wird der Modus 22 gewählt, in dem der Funktionsumfang des Reglers nur geringfügig eingeschränkt ist, beispielsweise in der Form, daß kein automatisches Anfahren möglich ist. Je nach Ausführungsform oder nach Zustand der Bremsanlage kann das Anfahren nach Fahrerquittung noch zugelassen oder ebenfalls unterbunden werden. Durch diese Maßnahmen wird das Bremssystem geschont, zumal nicht nur das Anhalten, sondern auch das kontrollierte Anfahren mit schleifender Bremse einen erhöhten Verschleiß des Bremssystems mit sich bringt. Durch die Begrenzung der Stop & Go Funktion wird somit der Gefahr eines Ausfalls oder einer ernsten Funktionsbeeinträchtigung der Bremse vorgebeugt.

Wenn das Signal Z anzeigt, daß die Bremse bereits abgenutzt ist, wählt die Überwachungseinrichtung 32 den Modus 24, der die zweite Stufe der Begrenzung des Funktionsumfangs darstellt. In dieser Stufe wird (zusätzlich zu den Beschränkungen nach Stufe 1) eine Aktivierung der Stop & Go Funktion durch den Fahrer nur noch dann zugelassen wenn die Fahrgeschwindigkeit oberhalb einer Grenzgeschwindigkeit von beispielsweise 20 km/h liegt. Dadurch wird die Häufigkeit von Beschleunigungs- und Bremsvorgängen bei stockendem Verkehr reduziert, da bei sehr niedriger Geschwindigikeit die Kontrolle vom Fahrer selbst übernommen wird, der das Verkehrsgeschehen vorausschauender beurteilen kann. Wenn jedoch die Stop & Go Funktion bei einer Geschwindigeit von mehr als 20 km/h aktiv war, bleibt sie auch dann aktiv, wenn die Geschwindigkeit unter diesen Wert abnimmt. Der Komfort wird somit durch diese Funktionseinschränkung nur geringfügig beeinträchtigt.

Wenn im Modus 24 die Fahrgeschwindigkeit unter beispielsweise 10 km/h sinkt, wird die Stop & Go Funktion auf einen sogenannten Brake only Modus beschränkt, in dem der Regler nur noch in das Bremssystem 16 aber nicht mehr in das Antriebssystem 14 eingreift. Das Fahrzeug kann somit nur noch kontrolliert gebremst aber nicht mehr automatisch wieder beschleunigt werden, so daß die Bremse noch in stärkerem Ausmaß geschont wird. Sinkt die Geschwindigkeit schließlich unter beispielsweise 5 km/h, wird im Modus 24 die geschwindigkeitsabhängige Regelung ganz ausgesetzt, und das Fahrzeug wird nach einem vorgegebenen Programm in den Stand gebremst. Auf diese Weise werden insbesondere längere Fahrten mit schleifender Bremse vermieden.

Bei noch stärkerer Abnutzung des Bremssystems wird als dritte Stufe auf den Betriebsmodus 26 umgeschaltet. In diesem Modus ist die Stop & Go Funktion ganz deaktiviert, so daß nur noch bei Geschwindigkeiten oberhalb von 30 km/h die ACC-Funktion benutzbar ist.

Bei noch stärkerer Abnutzung der Bremsanlage erfolgt als letzte Stufe (Betriebsmodus 28) eine vollständige Deaktivierung des ACC-Reglers.

Sofern die Selbstdiagnoseeinrichtung 40 auch Situationen erkennen kann, in denen sich das Bremssystem selbst zum Teil wieder regeneriert hat, ist es zweckmäßig, daß die Überwachungseinrichtung ständig in Betrieb bleibt, so daß sie auch ein Zurückschalten auf eine niedrigere Stufe der Funktionsbeschränkung oder gar in den Standard-Betriebsmodus 20 veranlassen kann. Als Beispiel ist denkbar, daß die Selbstdiagnoseeinrichtung 40 auch die Temperatur der Bremsen überwacht, so daß bei erhöhter Temperatur, etwa nach einer langen Gefällstrecke mit stockendem Verkehr, der Funktionsumfang mehr oder weniger eingeschränkt und dann, nachdem sich die Bremsen wieder abgekühlt haben, wieder erweitert werden kann.

Über die Änderungen des Betriebsmodus wird der Fahrer jeweils durch eine Anzeige auf dem Display 36 informiert.

## Patentansprüche

1. Geschwindigkeits- und Abstandsregler für Kraftfahrzeuge, der in einem Standard-Betriebsmodus (20) eine Funktionalität aufweist, die eine Regelung auch bei niedriger Geschwindigkeit erlaubt und in das Bremssystem (16) des Fahrzeugs eingreift, **gekennzeichnet durch** eine Überwachungseinrichtung (32) zur Überwachung des Zustands des Bremssystems (16) und eine Schalteinrichtung (30) zum Umschalten zwischen dem Standard-Betriebsmodus (20) und einem eingeschränkten, für das Bremssystem schonenderen Betriebsmodus (22, 24, 26, 28) in Abhängigkeit vom Resultat der Überwachung.

2. Geschwindigkeits- und Abstandsregler nach Anspruch 1, **dadurch gekennzeichnet, daß** der Überwachungseinrichtung (32) eine Fahrerschnittstelle (34) zugeordnet ist, über die bei Umschaltung aus dem Standard-Betriebsmodus (20) in den eingeschränkten Betriebsmodus (22, 24, 26, 28) ein Hinweis an den Fahrer ausgebbar ist.

3. Geschwindigkeits- und Abstandsregler nach Anspruch 1 oder 2, **dadurch gekennzeichnet, daß** der Standard-Betriebsmodus (20) eine Regelfunktion (ACC) für höhere Fahrgeschwindigkeiten umfaßt, die nur oberhalb einer bestimmten Mindestgeschwindigkeit aktivierbar ist, sowie eine Stop & Go Funktion, die normalerweise bei jeder Geschwindigkeit unterhalb der Mindestgeschwindigkeit aktivierbar ist, und daß im eingeschränkten Betriebsmodus (24, 26) die Stop & Go Funktion durch den Fahrer nur oberhalb einer Grenzgeschwindigkeit aktivierbar ist, die kleiner ist als die Mindestgeschwindigkeit.

4. Geschwindigkeits- und Abstandsregler nach Anspruch 3, **dadurch gekennzeichnet, daß** die Stop & Go Funktion, sofern sie aktiv ist, auch dann aktiv bleibt, wenn die Geschwindigkeit unter die Grenzgeschwindigkeit sinkt.

5. Geschwindigkeits- und Abstandsregler nach einem der vorstehenden Ansprüche, **gekennzeichnet durch** mehrere eingeschränkte Betriebsmodi (22, 24, 26, 28), in denen der Funktionsumfang stufenweise stärker eingeschränkt ist.

6. Geschwindigkeits- und Abstandsregler nach einem der vorstehenden Ansprüche, **dadurch gekennzeichnet, daß** der Standard-Betriebsmodus (20) eine Funktion umfaßt, die ein automatisches Anfahren des Fahrzeugs steuert, und daß diese Funktion im eingeschränkten Betriebsmodus oder in mindestens einem der eingeschränkten Betriebsmodi (22, 24, 26,28) blockiert ist.

7. Geschwindigkeits- und Abstandsregler nach einem der vorstehenden Ansprüche, **dadurch gekennzeichnet, daß** in mindestens einem (24) der eingeschränkten Betriebsmodi die Funktion des Reglers (12) so beschränkt ist, daß er unterhalb einer bestimmten Geschwindigkeit nur noch in das Bremssystem (16) aber nicht mehr in das Antriebssystem (14) des Fahrzeugs eingreift.

8. Geschwindigkeits- und Abstandsregler nach einem der vorstehenden Ansprüche, **dadurch gekennzeichnet, daß** mindestens einer (24) der eingeschränkten Betriebsmodi eine Funktion umfaßt, die das Fahrzeug gesteuert in den Stand bremst, sobald die Geschwindigkeit unter einen bestimmten Schwellenwert abgenommen hat.

9. Geschwindigkeits- und Abstandsregler nach einem der vorstehenden Ansprüche, **dadurch gekennzeichnet, daß** die Überwachungseinrichtung (32) und die Schalteinrichtung (30) dazu ausgebildet sind, in mindestens einem (24) der eingeschränkten Betriebsmodi den Regler (12) oder zumindest die Stop & Go Funktion ganz zu deaktivieren.

10. Geschwindigkeits- und Abstandsregler- nach einem der vorstehenden Ansprüche, **dadurch gekennzeichnet, daß** die Überwachungseinrichtung (32) dazu ausgebildet ist, zur Überwachung des Zustands des Bremssystems (16) ein Signal (D) auszuwerten, das die kumulierte Betriebsdauer des Reglers angibt.

11. Geschwindigkeits- und Abstandsregler nach einem der vorstehenden Ansprüche, **dadurch gekennzeichnet, daß** die Überwachungseinrichtung (32) zur Überwachung des Zustands des Bremssystems (16) mit einer Selbstdiagnoseeinrichtung (40) dieses Bremssystems verbunden ist.

## Claims

1. Speed and distance controller for motor vehicles, which has, in a standard operating mode (20), a functionality which permits control even at a low speed and intervenes in the brake system (16) of the vehicle, **characterized by** a monitoring device (32) for monitoring the state of the brake system (16), and a switching device (30) for switching over, as a function of the result of the monitoring process, between the standard operating mode (20) and a limited operating mode (22, 24, 26, 28) which places less loading on the brake system.

2. Speed and distance controller according to Claim 1, **characterized in that** the monitoring device (32) is assigned a driver interface (34) via which an indication can be output to the driver when there is a switchover from the standard operating mode (20) into the limited operating mode (22, 24, 26, 28).

3. Speed and distance controller according to Claim 1 or 2, **characterized in that** the standard operating mode (20) comprises a control function (ACC) for relatively high velocities which can be activated only above a certain minimum speed, and a stop & go function which can normally be activated at any speed below the minimum speed, and that in the limited operating mode (24, 26) the stop & go function can be activated by the driver only above a limiting speed which is lower than the minimum speed.

4. Speed and distance controller according to Claim 3, **characterized in that** if the stop & go function is active, it remains active even if the speed drops below the limiting speed.

5. Speed and distance controller according to one of the preceding claims, **characterized by** a plurality of limited operating modes (22, 24, 26, 28) in which the functional scope is incrementally limited to a greater degree.

6. Speed and distance controller according to one of the preceding claims, **characterized in that** the standard operating mode (20) comprises a function which controls automatic starting of the vehicle, and **in that** this function is blocked in the limited operating mode or in at least one of the limited operating modes (22, 24, 26, 28).

7. Speed and distance controller according to one of the preceding claims, **characterized in that** in at least one (24) of the limited operating modes, the function of the controller (12) is limited in such a way that below a specific speed it intervenes only in the brake system (16) but no longer in the drive system (14) of the vehicle.

8. Speed and distance controller according to one of the preceding claims, **characterized in that** at least one (24) of the limited operating modes comprises a function which brakes the vehicle in a controlled fashion to a stationary state as soon as the speed has decreased below a specific threshold value.

9. Speed and distance controller according to one of the preceding claims, **characterized in that** the monitoring device (32) and the switching device (30) are designed to deactivate the controller (12), or at least the stop & go function, entirely in at least one (24) of the limited operating modes.

10. Speed and distance controller according to one of the preceding claims, **characterized in that** the monitoring device (32) is designed in such a way that, in order to monitor the state of the brake system (16), it evaluates a signal (D) which indicates the cumulated operating period of the controller.

11. Speed and distance controller according to one of the preceding claims, **characterized in that**, in order to monitor the state of the brake system (16), the monitoring device (32) is connected to a self-diagnostic device (40) of this brake system.

## Revendications

1. Régulateur de vitesse et de distance pour des véhicules automobiles ayant une fonctionnalité de mode de fonctionnement standard (20) qui permet une régulation même à vitesse faible et intervient sur le système de freinage (16) du véhicule,
**caractérisé par**
une installation de surveillance (32) pour surveiller l'état du système de frein (16) et une installation de commutation (30) pour commuter entre le mode de fonctionnement standard (20) et un mode de fonctionnement limité (22,24, 26, 28), ménageant le système de frein, la commutation se faisant en fonction du résultat de la surveillance.

2. Régulateur de vitesse et de distance selon la revendication 1,
**caractérisé en ce que**
l'installation de surveillance (32) est associée à une interface conducteur (34) par l'intermédiaire de laquelle, lors de la commutation du mode de fonctionnement standard (20) au mode de fonctionnement limité (22, 24, 26, 28), on émet une indication à destination du conducteur.

3. Régulateur de vitesse et de distance selon la revendication 1 ou 2,
**caractérisé en ce que**
le mode de fonctionnement standard (20) comprend une fonction de régulation (ACC) pour les vitesses de circulation relativement élevées, cette fonction n'étant activée qu'au-dessus d'une certaine vitesse minimale déterminée ainsi qu'une fonction marche/arrêt qui l'est normalement à chaque vitesse inférieure à la vitesse minimale, et en mode de fonctionnement limité (24, 26), la fonction marche/arrêt peut être activée par le conducteur seulement au-dessus d'une vitesse limite inférieure à la vitesse minimale.

4. Régulateur de vitesse et de distance selon la revendication 3,
**caractérisé en ce que**
la fonction marche/arrêt dans la mesure où elle est activée, reste également activée lorsque la vitesse descend en dessous de la vitesse limite.

5. Régulateur de vitesse et de distance selon les revendications précédentes,
**caractérisé par**
plusieurs modes de fonctionnement limités (22, 24, 26, 28) dans lesquels l'importance des fonctions est limitée plus fortement par étape.

6. Régulateur de vitesse et de distance selon les revendications précédentes
**caractérisé en ce que**
le mode de fonctionnement standard (20) comprend une fonction qui commande automatiquement le démarrage du véhicule et **en ce que** cette fonction est bloquée en mode de fonctionnement limité ou au moins dans l'un des modes de fonctionnement limités (22, 24, 26, 28).

7. Régulateur de vitesse et de distance selon les revendications précédentes
**caractérisé en ce que**
dans au moins un mode de fonctionnement limité (24), la fonction du régulateur (12) est limitée pour qu'en dessous d'une certaine vitesse déterminée, le régulateur n'intervient plus que sur le système de frein (16) et non plus sur le système d'entraînement (14) du véhicule.

8. Régulateur de vitesse et de distance selon les revendications précédentes
**caractérisé en ce qu'**
au moins l'un (24) des modes de fonctionnement limités comprend une fonction qui freine le véhicule de façon commandée jusqu'à l'arrêt, dès que la vitesse a diminué en dessous d'un certain seuil.

9. Régulateur de vitesse et de distance selon les revendications précédentes
**caractérisé en ce que**
l'installation de surveillance (32) et l'installation de commutation (30) sont réalisées pour que dans au moins un (24) des modes de fonctionnement limités, il neutralise complètement le régulateur (12) ou au moins la fonction marche/arrêt.

10. Régulateur de vitesse et de distance selon les revendications précédentes
**caractérisé en ce que**
l'installation de surveillance (32) est conçue pour surveiller l'état du système de frein (16) en exploitant un signal (D) indiquant la durée de fonctionnement cumulée du régulateur.

11. Régulateur de vitesse et de distance selon les revendications précédentes
**caractérisé en ce que**
l'installation de surveillance (32) est reliée à une installation d'autodiagnostic (40) du système de frein pour surveiller l'état du système de frein (16).
